# EUROPEAN PATENT SPECIFICATION

(11) **EP 3 966 459 B1**
(45) Date of publication and mention of the grant of the patent: **19.04.2023**
(21) Application number: 20728828.3
(22) Date of filing: 22.04.2020
(51) Int. Cl.: F16B 2/24, F16B 5/06

(54) **SNAP CLOSURE WITH ADJUSTMENT OF ITS SNAP TENSION**
SCHNAPPVERSCHLUSS MIT EINSTELLUNG SEINER SCHNAPPSPANNUNG
FERMETURE À DÉCLIC AVEC RÉGLAGE DE SA TENSION D'ENCLIQUETAGE

(30) Priority: 09.05.2019 IT 201900006676
(43) Date of publication of application: 16.03.2022
(73) Proprietor: Specialinsert S.r.l., 10136 Torino (IT)
(72) Inventor: SANUA, Andrea, 10136 Torino (IT)
(74) Representative: Garavelli, Paolo
(86) International application number: PCT/IT2020/050100
(87) International publication number: WO 2020/225837

(56) References cited:
- EP-A1- 2 737 816
- WO-A1-2007/025687

## Description

The present invention refers to a snap closure with adjustment of its snap tension.

In general, the present invention refers to connections of building element or parts of machines.

In particular, the present invention refers to joints of the quick action type, wherein the connection between coupling or axially overlapped ends is kept by blocking elements combined with automatic locking through fastening elements radially pushed by spring elements, releasable fastening devices with a snap action wherein their pin has an elastic part of the inserting pin stem.

In particular, the present invention refers to details made of any material, preferably of metallic foils, with at least one recess having a specific shape.

The prior art is given by US-A-4,470,737, which discloses a fastening element of a piece of plastics having a stem, an enlarged head on a rear end of the stem and forks resiliently moving at the front end of the stem, the median portion of the stem being wider than each of its ends to provide a shoulder and be capable of flexibly contract in its width so that the fastening device enters into holes aligned in the pieces to be joined with a snap action. The stem is forking along its length, and the front opening slit between its forks or legs is partially filled by a voltage-adjusting element, integrally formed with the forks along one of its sides and extending towards inside from the slit side for a certain distance. The element controls or determines the amount of force required to move the legs or the forks one towards the other when inserting or removing the fastening device in/from the hole in the piece to be worked. Therefore, the fastening elements of the same size and shape can be designed to be suited to holes of the piece with the same diameter but with different force requirements by simply changing the length of the voltage-adjusting element when manufacturing the fastening device, and without otherwise changing sizes or configuration of the fastening device.

US-A-4,470,737 solves the problem of controlling the force required for the snap of a joint of the quick-action type through blocking elements combined with automatic locking. However, such solution designed only for plastic elements cannot be used for a snap closure subjected to high loads and made of metal.

EP-A1-2 737 816 discloses a snap closure according to the prior art.

Object of the present invention is solving the above prior art problems, by providing a snap closure with adjustment of its snap tension with elastic tabs made in the female part of a metallic component and with a screw-type adjustment device on a basic plate with various shapes and measures, the female part and a male part being fastened on their respective receiving material through screws, glues, adhesives, wires etc.

A further object is providing a snap closure with adjustment of its snap tension which allows modifying the unfastening force of the button by changing the tabs' width.

A further object is providing a snap closure with adjustment of its snap tension which allows making a removable fastening for every need, that can be easily and quickly installed, capable of providing flexibility of use, usefulness in every sector, resistance to flames and corrosion, is self-centring, with minimum overall sizes, with a variable withdrawal force, with the chance of an adjustment by a user.

The above and other objects and advantages of the invention, as will result from the following description, are obtained with a snap closure with adjustment of its snap tension, as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention, as appears from the enclosed claims.

The present invention will be better described by some preferred embodiments thereof, provided as a non-limiting example, with reference to the enclosed drawings, in which:

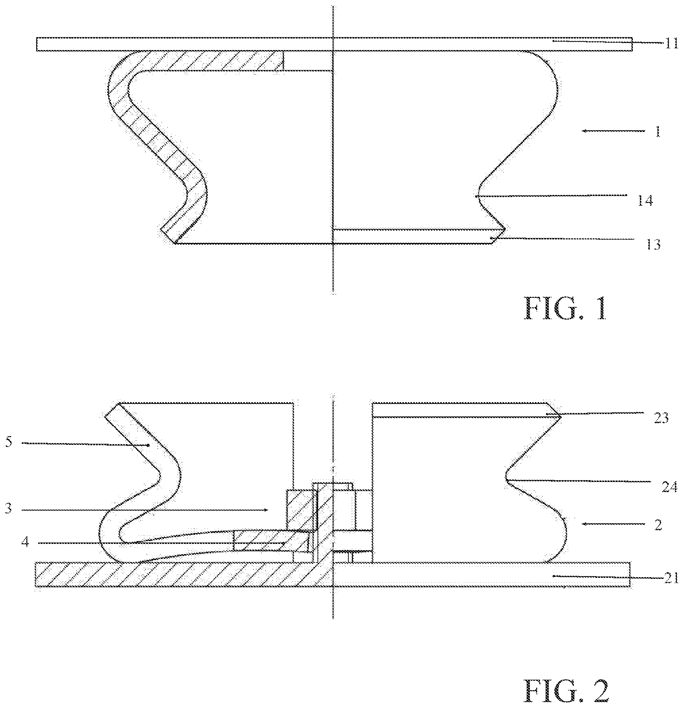

- Figure 1 shows a partial front and axial-symmetric sectional view of a first component of the embodiment of the snap closure with tension adjustment according to the present invention;
- Figure 2 shows a partial front and axial-symmetrical sectional view of a second component connected to a supporting material of the embodiment of the snap closure with voltage adjustment according to the present invention;

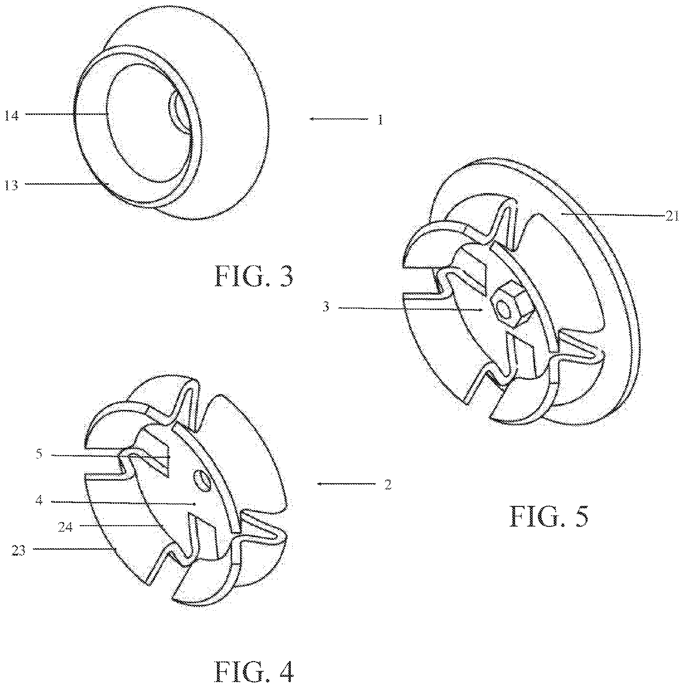

- Figure 3 shows a perspective view of the component of Figure 1;
- Figure 4 shows a perspective view of the component of Figure 2; and
- Figure 5 shows a perspective assembly view of the embodiment of the snap closure with tension adjustment according to the present invention.

With reference to the Figures, it is possible to note that a snap closure with adjustment of its snap tension according to the present invention comprises a male component 1 selectively engaged in a female component 2. The male component 1 and/or the female component 2 can be fastened to a respective supporting device 11, 21 designed to receive connecting means to a surface of a respective substrate.

Advantageously, the snap closure according to the present invention further comprises at least one removable connecting device 3 provided to allow changing a geometric shape of at least one component of the snap closure.

The removable connecting device 3 interacts with at least one portion of deformable material 4 of the female component 2 to allow changing the seat of the male component 1.

The male component 1 comprises an internal crown 13 with an internal shrinkage 14. At the same time, the female component 2 comprises an external crown 23 with an external shrinkage 24.

The external shrinkage 24 is provided to receive the internal shrinkage 14, depending on the variation of the portion of deformable material 4. In fact, the external shrinkage 24 is mechanically connected to the portion of deformable material 4.

Il female component 2 comprises at least one notch 5 obtained in the wall of the external crown 23 and of the external shrinkage 24.

Such at least one notch 5 affects part of the portion of deformable material 4.

The portion of deformable material 4 is composed of a concave foil, the removable connecting device 3 being composed of a threaded union pressing at the centre of the portion of deformable material 4.

Preferably, the snap closure is formed of axial-symmetric components.

The male component 1 and the female component 2 can be made of a foil or of moulded plastics, or through other working processes, and fastened to their respective supporting device 11, 21, for example through welding, screws, glues, adhesives, wires, etc.

The snap closure with adjustment of its snap tension of the present invention solves the above mentioned problems. In particular, the chance of modifying the unfastening force of the button by changing the tabs' width is obtained by acting on the adjustment of the female crown fastened on the basic plate or other type of support or substrate. By screwing a nut, a greater compression is obtained in the concave base of the female button, due to the resiliency of the material, allowing to move the tabs towards inside with a diameter reduction for the fastening.

## Claims

1. Snap closure with adjustment of its snap tension, comprising a male component (1) selectively engaged in a female component (2), said male component (1) and/or female component (2) being fastened to a respective supporting device (11, 21) designed to receive connecting means to a surface of a respective substrate, **characterized in that** it comprises at least one removable connecting device (3) designed to change a geometric shape of at least one component of said snap closure.

2. Snap closure according to the previous claim, **characterized in that** said removable connecting device (3) is designed to interact with at least one portion of deformable material (4) of said female component (2) to change a seat of said male component (1).

3. Snap closure according to any one of the previous claims, **characterized in that** said male component (1) comprises an internal crown (13) with an internal shrinkage (14), and **in that** said female component (2) comprises an external crown (23) with an external shrinkage (24), said external shrinkage (24) being designed to receive said internal shrinkage (14), depending on a change of said portion of deformable material (4), said external shrinkage (24) being mechanically connected to said portion of deformable material (4).

4. Snap closure according to the previous claim, **characterized in that** said female component (2) comprises at least one notch (5) obtained in a wall of the external crown (23) and of the external shrinkage (24).

5. Snap closure according to the previous claim, **characterized in that** said at least one notch (5) affects a part of the portion of deformable material (4).

6. Snap closure according to any one of the previous claims, **characterized in that** said portion of deformable material (4) is composed of a concave foil, the removable connecting device (3) being composed of a threaded union pressing at a centre of said portion of deformable material (4).

7. Snap closure according to any one of the previous claims, **characterized in that** it is formed of axial-symmetric components.

8. Snap closure according to any one of the previous claims, **characterized in that** said male component (1) and female component (2) are made of foils or moulded plastics, and are fastened to their respective supporting device (11, 21).

## Patentansprüche

1. Schnappverschluss mit Einstellung der Auslösespannung, umfassend eine männliche Komponente (1), die selektiv in eine weibliche Komponente (2) eingreift, wobei die männliche (1) und/oder weibliche Komponente (2) an einer jeweiligen Haltevorrichtung (11, 21) befestigt ist, geeignet zum Aufnehmen von Verbindungsmitteln an einer Oberfläche eines jeweiligen Substrats, **dadurch gekennzeichnet, dass** es mindestens eine entfernbare Verbindungsvorrichtung (3) umfasst, die so gestaltet ist, dass sie eine geometrische Form mindestens einer Komponente des Schnappverschlusses verändert.

2. Schnappverschluss nach dem vorhergehenden Anspruch, **dadurch gekennzeichnet, dass** die lösbare Verbindungsvorrichtung (3) so gestaltet ist, dass sie mit mindestens einem Teil des verformbaren Materials (4) der weiblichen Komponente (2) zusammenwirkt, um den Sitz der männlichen Komponente zu verändern (1).

3. Schnappverschluss nach einem der vorangehenden Ansprüche, **dadurch gekennzeichnet, dass** die männliche Komponente (1) eine innere Krone (13) mit einer inneren Verengung (14) umfasst, und dass die weibliche Komponente (2) eine äußere Krone umfasst Verengung (23) mit einer äußeren Verengung (24), wobei die äußere Verengung (24) so gestaltet ist, dass sie die innere Verengung (14) in Bezug auf die Variation des Abschnitts aus verformbarem Material (4) aufnimmt, wobei die äußere Verengung (24) mechanisch mit dem Abschnitt aus verformbarem Material (4) verbunden ist.

4. Schnappverschluss nach dem vorhergehenden Anspruch, **dadurch gekennzeichnet, dass** das aufnehmende Element (2) mindestens eine Kerbe (5) umfasst, die in einer Wand des äußeren Kranzes (23) und der äußeren Verengung (24) ausgebildet ist.

5. Schnappverschluss nach dem vorhergehenden Anspruch, **dadurch gekennzeichnet, dass** die mindestens eine Kerbe (5) einen Teil des Abschnitts aus verformbarem Material (4) betrifft.

6. Schnappverschluss nach einem der vorhergehenden Ansprüche, **dadurch gekennzeichnet, dass** der Abschnitt aus verformbarem Material (4) aus einer konkaven Schicht besteht, wobei die lösbare Verbindungsvorrichtung (3) aus einer Gewindeverbindung besteht, die in deren Mitte drückt Abschnitt aus verformbarem Material (4).

7. Schnappverschluss nach einem der vorhergehenden Ansprüche, **dadurch gekennzeichnet, dass** er durch axialsymmetrische Bauteile gebildet ist.

8. Schnappverschluss nach einem der vorhergehenden Ansprüche, **dadurch gekennzeichnet, dass** die männlichen (1) und weiblichen (2) Komponenten aus Blech oder geformtem Kunststoff hergestellt und an der jeweiligen Haltevorrichtung (11, 21) befestigt sind.

## Revendications

1. Fermeture à pression avec réglage de la tension de déclenchement, comprenant un composant mâle (1) sélectivement engagé dans un composant femelle (2), ledit composant mâle (1) et/ou femelle (2) étant fixé à un dispositif de support respectif (11, 21) apte à recevoir des moyens de connexion à une surface d'un substrat respectif, **caractérisé en ce qu'**il comprend au moins un dispositif de connexion amovible (3) conçu pour faire varier une forme géométrique d'au moins un composant de ladite fermeture à pression.

2. Fermeture à pression selon la revendication précédente, **caractérisée en ce que** ledit dispositif de connexion amovible (3) est conçu pour coopérer avec au moins une portion de matière déformable (4) dudit composant femelle (2) pour faire varier l'assise dudit composant mâle (1).

3. Fermeture à pression selon l'une quelconque des revendications précédentes, **caractérisée en ce que** ledit composant mâle (1) comprend une couronne interne (13) avec un rétrécissement interne (14), et **en ce que** ledit composant femelle (2) comprend une couronne externe rétrécissement (23) avec un rétrécissement externe (24), ledit rétrécissement externe (24) étant destiné à recevoir ledit rétrécissement interne (14), en relation avec la variation de ladite portion de matériau déformable (4), ledit rétrécissement externe (24) étant relié mécaniquement à ladite portion de matériau déformable (4).

4. Fermeture à pression selon la revendication précédente, **caractérisée en ce que** ledit élément femelle (2) comporte au moins une encoche (5) ménagée dans une paroi de la couronne externe (23) et du rétrécissement externe (24).

5. Fermeture à pression selon la revendication précédente, **caractérisée en ce que** ladite au moins une encoche (5) implique une partie de la portion de matière déformable (4).

6. Fermeture à pression selon l'une quelconque des revendications précédentes, **caractérisée en ce que** ladite portion de matière déformable (4) est constituée par une lamelle concave, le dispositif de liaison amovible (3) étant constitué par un raccord fileté appuyant au centre de ladite portion de matériau déformable (4).

7. Fermeture à pression selon l'une quelconque des revendications précédentes, **caractérisée en ce qu'**elle est formée par des composants à symétrie axiale.

8. Fermeture à pression selon l'une quelconque des revendications précédentes, **caractérisée en ce que** lesdits composants mâle (1) et femelle (2) sont réalisés en tôle ou en plastique moulé et fixés au dispositif de support respectif (11, 21).
